# EUROPEAN PATENT SPECIFICATION

(11) **EP 3 605 047 B1**
(45) Date of publication and mention of the grant of the patent: **16.12.2020**
(21) Application number: 17903521.7
(22) Date of filing: 27.03.2017
(51) Int. Cl.: G01K 11/26

(54) **TEMPERATURE MEASURING INSTRUMENT, GAS-INSULATED APPARATUS, AND CONDUCTOR TEMPERATURE MEASURING METHOD**
TEMPERATURMESSINSTRUMENT, GASISOLIERTE VORRICHTUNG UND LEITERTEMPERATURMESSVERFAHREN
INSTRUMENT DE MESURE DE TEMPÉRATURE, APPAREIL À ISOLATION GAZEUSE ET PROCÉDÉ DE MESURE DE LA TEMPÉRATURE D'UN CONDUCTEUR

(43) Date of publication of application: 05.02.2020
(73) Proprietor: Mitsubishi Electric Corporation, Chiyoda-ku Tokyo 100-8310 (JP)
(72) Inventor: TAMURA, Yoshiyuki, Tokyo 100-8310 (JP)
(74) Representative: Witte, Weller & Partner Patentanwälte mbB
(86) International application number: PCT/JP2017/012395
(87) International publication number: WO 2018/179055

(56) References cited:
- JP-A- S57 154 024
- JP-A- S57 160 030
- JP-A- S57 160 032
- JP-A- S57 160 032
- JP-A- 2000 504 552
- JP-A- 2009 053 025
- JP-A- 2016 524 130
- US-A- 6 014 083

## Description

### Field

The present invention relates to a temperature measuring instrument for measuring a temperature of a conductor of a gas insulated device, a gas insulated device including the temperature measuring instrument, and a conductor temperature measuring method using the temperature measuring instrument.

### Background

Gas insulated devices energize conductors disposed in tanks filled with insulation gas. The conductor temperature serves as an indicator of detection of abnormal heat generation due to poor contact at a conductor connection that is a joint between the conductors. The conductor temperature also serves as the indicator of deterioration of grease applied to a conductor movable portion. Therefore, there is a need for measuring the temperature of the conductor of the gas insulated device during the operation of the gas insulated device.

An inside of the gas insulated device in operation provides a high electric field state. It was therefore difficult to measure the temperature of the conductor of the gas insulated device during the operation of the gas insulated device even if a sensor is attached to the conductor. This is because it is not possible to draw a lead wire leading to the sensor, out of a housing of the device under the high electrical field.

Patent Literature 1 suggests a method for remotely measuring temperature of an object to be measured. The temperature measuring method disclosed in Patent Literature 1 involves providing a resonator formed using a quartz oscillator having a temperature characteristic of a resonance frequency and two lead wires, and changing a frequency from an oscillation facility, such that the temperature of the object to be measured is measured on the basis of a frequency of a resonance signal detected by a receiving facility.

Patent Literature 2 discloses (see fig. 1) temperature sensing of an electrical conductor (6) of a gas-insulated switchgear (1), wherein the temperature is measured by a SAW temperature sensor (7a) connected to an antenna (9).

Patent Literature 3 discloses (see fig. 1) temperature sensing of an electrical conductor (3) of a gas-insulated equipment, wherein temperature is measured thanks to a vibrating body (6), whose vibration state changes according to the temperature of the conductor (3), and a vibration detector (7) located outside the gas-insulated container (1).

Patent Literature 4 discloses (see fig. 1) temperature sensing of an electrical conductor (2) of a gas-insulated equipment (1). At abnormal temperature, a bi-metallic element (10) deforms, comes into contact with an electrical contact (11), which closes the electric circuit, causing an oscillation device (14) (e.g. a buzzer) to emit a vibration which is sensed by a vibration detector (15) located outside the closed gas-insulated container (1).

Patent Literature 5 discloses (see fig. 1) temperature sensing of an electrical conductor (2) of a gas-insulated equipment (1), wherein temperature is measured thanks to a battery-powered oscillator (6) and a vibration detector (8) located outside the container (1).

### Citation List

### Patent Literature

Patent Literature 1: Japanese Examined Patent Application Publication No. 63-50646
Patent Literature 2: US 6 014 083 A.
Patent Literature 3: JP S57 160032 A.
Patent Literature 4: JP S57 154024 A.
Patent Literature 5: JP S57 160030 A.

### Summary

### Technical Problem

When the temperature measuring method disclosed in Patent Literature 1 above is applied to the measurement of the temperature of the conductor of the gas insulated device, unfortunately, it is likely that ground fault occurs between the two lead wires of the resonator and the tank because the lead wire is attached to the quartz oscillator that should contact the conductor. For this reason, it was impossible to measure the temperature of the conductor of the gas insulated device during the operation of the gas insulated device.

The present invention is achieved in view of the above, and an object thereof is to obtain a temperature measuring instrument capable of measuring the temperature of the conductor of the gas insulated device during the operation of the gas insulated device.

### Solution to Problem

In order to solve the above-described problem and to achieve the object, the present invention provides a temperature measuring instrument for measuring a temperature of a conductor of a gas insulated device, the temperature measuring instrument comprising: a housing including a cylindrical outer frame having conductivity, the outer frame having first and second slot antennas formed therein; and a substrate accommodated in the housing, the substrate having a bandpass element and an isolator mounted thereon, the bandpass element being connected to the first slot antenna and having a resonance frequency having a temperature characteristic, the isolator being connected to the second slot antenna, the substrate including a wiring pattern interconnecting the bandpass element and the isolator. The bandpass element is in contact with and thermally connected to the conductor inserted into the housing.

### Advantageous Effects of Invention

The present invention provides an effect that the temperature of the conductor of the gas insulated device can be measured during the operation of the gas insulated device.

### Brief Description of Drawings

FIG. 1 is a top plan view of a temperature measuring instrument according to a first embodiment of the present invention.
FIG. 2 is a front elevational view of the temperature measuring instrument according to the first embodiment.
FIG. 3 is a side elevational view of the temperature measuring instrument according to the first embodiment.
FIG. 4 is a view schematically illustrating the temperature measuring instrument according to the first embodiment installed inside a tank of the gas insulated device.
FIG. 5 is a view illustrating an example of a signal waveform used for measuring temperature of a conductor of the gas insulated device by the temperature measuring instrument according to the first embodiment.
FIG. 6 is a top plan view of a temperature measuring instrument according to a second embodiment of the present invention.

### Description of Embodiments

A temperature measuring instrument, a gas insulated device, and a conductor temperature measuring method according to embodiments of the present invention are hereinafter described in detail with reference to the drawings. Note that the present invention is not limited to the embodiments.

### First Embodiment

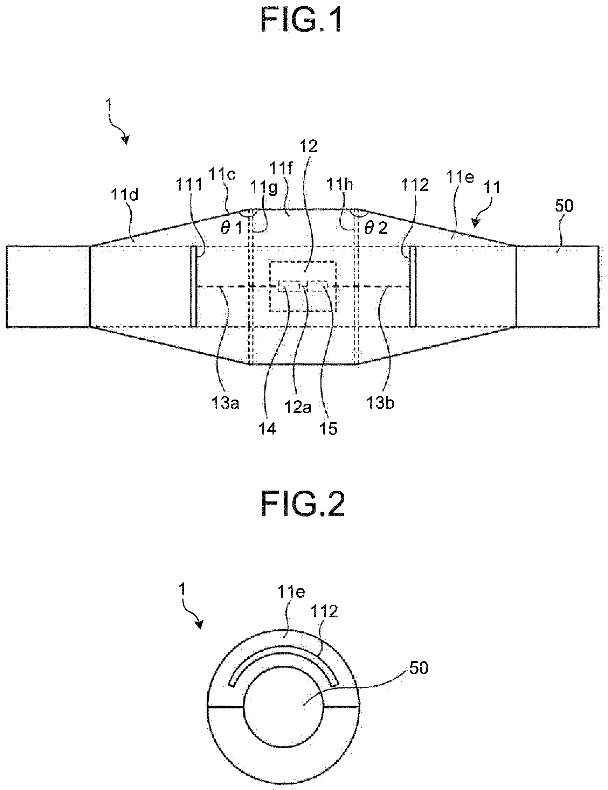

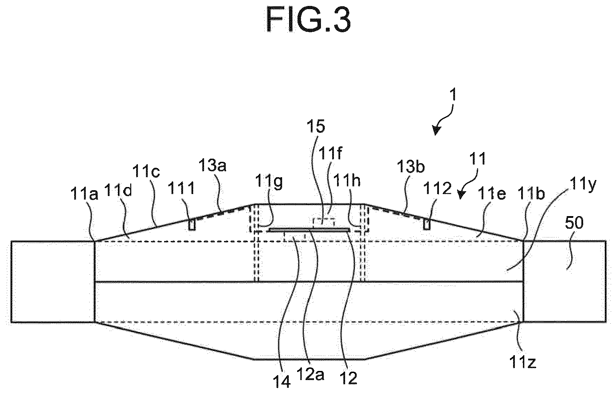

FIG. 1 is a top plan view of a temperature measuring instrument according to a first embodiment of the present invention. FIG. 2 is a front elevational view of the temperature measuring instrument according to the first embodiment. FIG. 3 is a side elevational view of the temperature measuring instrument according to the first embodiment. A temperature measuring instrument 1 includes a housing 11, a substrate 12, a coaxial cable 13a, and a coaxial cable 13b. The housing 11 has first and second slot antennas 111 and 112 formed therein. The substrate 12 is accommodated in the housing 11. The coaxial cable 13a interconnects the first slot antenna 111 and the substrate 12. The coaxial cable 13b interconnects the substrate 12 and the second slot antenna 112. The housing 11 is formed of a conductive material and has a cylindrical shape. The temperature measuring instrument 1 is installed on a conductor 50 of a gas insulated device with the housing 11 covering the outside of the conductor 50. The gas insulated device is, for example, a breaker, a disconnector, a bus bar, a current transformer for instrument, a transformer for instrument, or a grounding switch. In the first embodiment, the housing 11 is formed by a combination of housing parts 11y and 11z, but is not necessarily a divisible structure. The housing parts 11y and 11z have shapes obtained by dividing the housing 11 into two in an axial direction. Note that three or more housing parts may be combined together into the cylindrical shape of the housing 11.

The housing 11 includes an outer frame 11c. The outer frame 11c has its outer diameter first continuously increasing from one end 11a toward an opposite end lib, then remaining constant, and finally continuously decreasing. The outer frame 11c has tapered surfaces at two portions thereof. One of these two portions has an outer diameter continuously increasing from the one end 11a. The other portion has an outer diameter continuously decreasing toward the opposite end 11b. The portion having the outer diameter continuously increasing from the one end 11a of the outer frame 11c toward the opposite end 11b of the outer frame 11c is hereinafter referred to as a first tapered tapering portion 11d. The portion having the outer diameter continuously decreasing from a side of the one end 11a toward the opposite end 11b is hereinafter referred to as a second tapered tapering portion 11e. A portion between the first tapered portion 11d and the second tapered portion 11e of the outer frame 11c is referred to as an intermediate portion 11f. That is, the intermediate portion 11f is a portion having the constant outer diameter of the outer frame 11c.

An angle θ1 formed by the first tapered portion 11d and the intermediate portion 11f is an obtuse angle. An angle θ2 formed by the second tapered portion 11e and the intermediate portion 11f is an obtuse angle. Providing the obtuse angles θ1 and θ2 prevents occurrence of partial discharge from a corner between the first tapered portion 11d and the intermediate portion 11f or a corner between the second tapered portion 11e and the intermediate portion 11f. In the first embodiment, the angle θ1 is equal to the angle θ2 (θ1=θ2). Note that a boundary between the first tapered portion 11d and the intermediate portion 11f and a boundary between the second tapered portion 11e and the intermediate portion 11f may be curved surfaces having no corner.

The first slot antenna 111 is formed in the first tapered portion 11d and the second slot antenna 112 is formed in the second tapered portion 11e.

The housing part 11y has first and second partition walls 11g and 11h provided thereon. The first partition wall 11g separates the first tapered portion 11d and the intermediate portion 11f from each other. The second partition wall 11h separates the second tapered portion 11e and the intermediate portion 11f from each other. The first partition wall 11g and the second partition wall 11h are provided inside the housing 11. The first partition wall 11g and the second partition wall 11h are formed of a conductive material. The substrate 12 is disposed in a space surrounded by the first partition wall 11g, the second partition wall 11h, the intermediate portion 11f, and the conductor 50 when the temperature measuring instrument 1 is installed on the conductor 50.

Mounted on the substrate 12 are a bandpass element 14 and an isolator 15. The bandpass element 14 has a resonance frequency having a temperature characteristic. The isolator 15 limits a direction of passage of an electric signal to one direction. The bandpass element 14 provides a higher transmittance of an electric signal having a smaller difference between a frequency of the electrical signal and the resonance frequency of the bandpass element 14. The bandpass element 14 is, but not limited to, a ceramic oscillator or a quartz oscillator, for example. The bandpass element 14 is connected to the first slot antenna 111 by the coaxial cable 13a. The isolator 15 is connected to the second slot antenna 112 by the coaxial cable 13b. The bandpass element 14 and the isolator 15 are connected to each other by a wiring pattern 12a provided on the substrate 12. The isolator 15 allows the electric signal input from the bandpass element 14 to pass therethrough, but does not allow the electric signal input from the coaxial cable 13b to pass therethrough.

The bandpass element 14 is mounted on a surface of the substrate 12, the surface facing the conductor 50. The bandpass element 14 is in contact with and thermally connected to the conductor 50. Thus, temperature of the bandpass element 14 is the same as the temperature of the conductor 50. On the other hand, the isolator 15 is mounted on a surface of the substrate 12, the surface not facing the conductor 50. The isolator 15 is not in contact with the conductor 50. The isolator 15 is thus less susceptible to change in temperature of the conductor 50. Note that the isolator 15 may be mounted on the surface of the substrate 12 facing the conductor 50. Mounting the isolator 15 on the surface of the substrate 12 facing the conductor 50 can reduce an outer diameter dimension of the intermediate portion 11f of the housing 11, thereby reducing the size of the temperature measuring instrument 1.

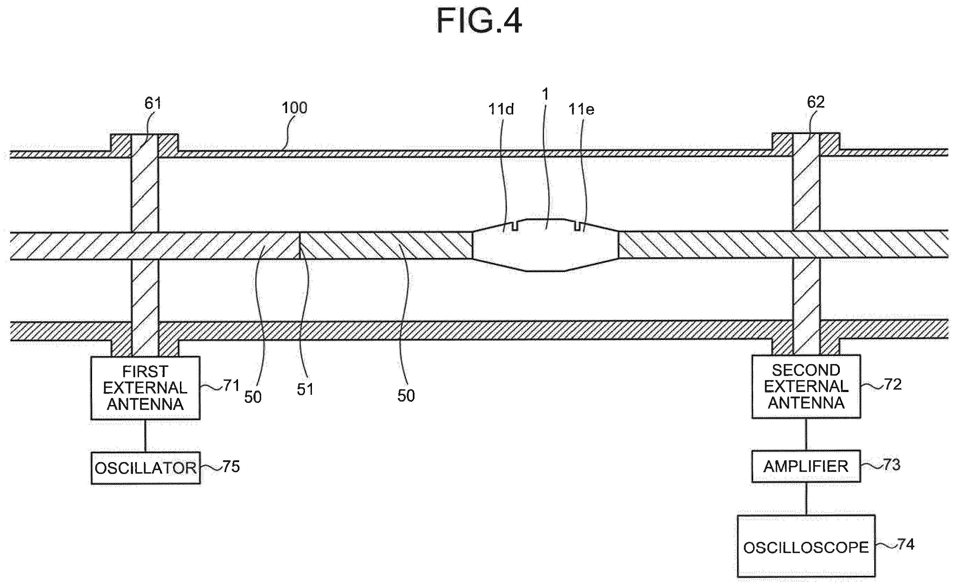

FIG. 4 is a view schematically illustrating the temperature measuring instrument according to the first embodiment installed inside a tank of the gas insulated device. The temperature measuring instrument 1 is installed in a space filled with insulating gas inside the tank 100 of the gas insulated device. The tank 100 is formed of a conductive material. Sulfur hexafluoride gas is commonly used as the insulating gas, but not limited thereto. In a case where the temperature measuring instrument 1 is disposed adjacent a conductor connecting portion 51 that is a portion interconnecting the conductors 50, the temperature of the bandpass element 14 may be regarded as the temperature of the conductor connecting portion 51.

When the conductor temperature is measured using the temperature measuring instrument 1, a first external antenna 71 is installed on one insulating spacer 61 of two insulating spacers 61 and 62 and a second external antenna 72 is installed on the other insulating spacer 62 with the temperature measuring instrument 1 being installed between the insulating spacers 61 and 62. The insulating spacers 61 and 62 are formed of an insulating material such as an epoxy resin. Note that the first external antenna 71 is installed on a side of the first tapered portion 11d, and the second external antenna 72 is installed on a side of the second tapered portion 11e. When an electric signal including a plurality of frequency components is input from an oscillator 75 into the first external antenna 71, the electric signal is converted into an electromagnetic wave by the first external antenna 71, after which the electromagnetic wave passes through the insulating spacer 61, and penetrates into the tank 100 of the gas insulated device. As a result, the electromagnetic wave provided by the first external antenna 71 propagates inside the tank 100 of the gas insulated device.

The electromagnetic wave propagating inside the tank 100 of the gas insulated device is converted into the electric signal by the first slot antenna 111, after which the electrical signal is input into the bandpass element 14 via the coaxial cable 13a. Because the resonance frequency of the bandpass element 14 has temperature dependence, a frequency component of the resonance frequency determined by the temperature of the conductor 50 passes through the bandpass element 14 and is input into the isolator 15. The electric signal input from the bandpass element 14 into the isolator 15 passes through the isolator 15 and is input into the second slot antenna 112 via the coaxial cable 13b. Note that although the electromagnetic wave propagating inside the tank 100 of the gas insulated device and input to the second slot antenna 112 is converted into the electric signal by the second slot antenna 112, such an electric signal provided by the second slot antenna 112 is blocked by the isolator 15, such that the electric signal does not reach the bandpass element 14.

The electric signal input from the coaxial cable 13b to the second slot antenna 112 is converted into the electromagnetic wave, after which the electromagnetic wave propagates inside the tank 100 of the gas insulated device. When the electromagnetic wave having propagated inside the tank 100 of the gas insulated device reaches the insulating spacer 62, the electromagnetic wave passes through the insulating spacer 62 into the second external antenna 72, such that the electromagnetic wave is converted into the electric signal by the second external antenna 72. The electric signal resulting from the conversion by the second external antenna 72 is amplified by an amplifier 73 and then input into an oscilloscope 74 for displaying a waveform of the electrical signal. The waveform displayed on the oscilloscope 74 is a waveform in which intensity of the frequency component of the resonance frequency determined by the temperature of the conductor 50 is the highest. It is therefore possible to determine the temperature of the conductor 50 on the basis of the waveform displayed on the oscilloscope 74.

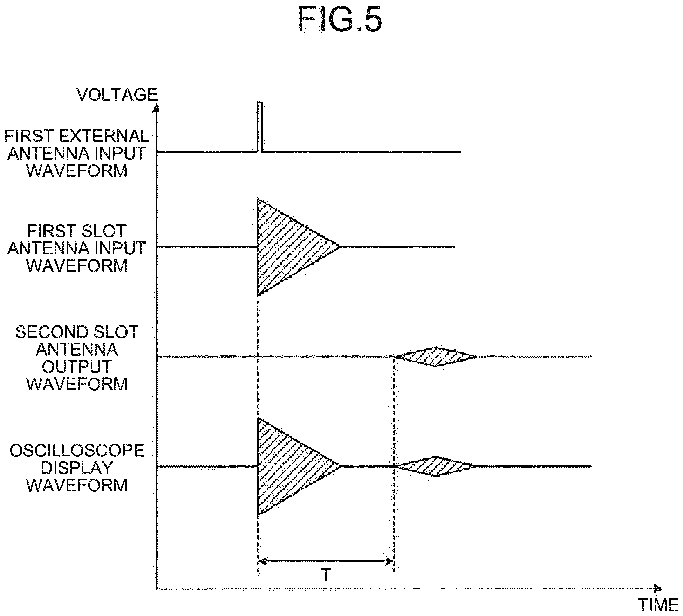

FIG. 5 is a view illustrating an example of a signal waveform used for measuring the temperature of the conductor of the gas insulated device by the temperature measuring instrument according to the first embodiment. A pulse signal, which is a composite wave made up of waveforms of a plurality of frequency components, is input from the oscillator into the first external antenna 71. That is, electric signals of a plurality of frequency components are simultaneously input into the first external antenna 71. The pulse signal is converted into a broadband electromagnetic wave by the first external antenna 71, after which the broadband electromagnetic wave passes through the insulating spacer 61, and penetrates in the tank 100 of the gas insulated device. Note that a part of the electromagnetic wave having penetrated into the tank 100 propagates being repeatedly reflected inside the tank 100 of the gas insulated device. As a result, the electromagnetic wave having travelled on the shortest path reaches the first slot antenna 111 the earliest while the electromagnetic wave having travelled on a longer path due to the reflection reaches the first slot antenna 111 later. In addition, the intensity of the electromagnetic wave, which reaches the first slot antenna 111 through the shortest path, is the highest, and the intensity of the electromagnetic wave passing through the longer path becomes weaker. As a result, the waveform of the electromagnetic wave input into the first slot antenna 111 has a triangular shape in which the intensity decreases with time. The broadband electromagnetic wave transmitted from the first external antenna 71 is converted into the electric signal by the first slot antenna 111, after which the frequency component having a smaller frequency difference from the resonance frequency of the bandpass element 14 passes through the bandpass element 14 with larger transmittance. As a result, in the electromagnetic wave output from the second external antenna 72, the frequency component of the resonance frequency of the bandpass element 14 is the highest in intensity in a plurality of frequency components included in the pulse signal input to the first external antenna 71.

The oscilloscope 74 displays: the waveform of the electromagnetic wave received by the second external antenna 72 not via the temperature measuring instrument 1; and the waveform of the electromagnetic wave received by the second external antenna 72 via the temperature measuring instrument 1. The signal passing through the bandpass element 14 is transmitted from the second slot antenna 112 after a lapse of a delay time T due to the characteristic of the bandpass element 14 after the oscillator 75 generates the pulse signal. The delay time is constant irrespective of the temperature of the bandpass element 14. For this reason, the temperature of the conductor 50 can be measured by observing the waveform displayed on the oscilloscope 74 after the delay time T elapses after the oscillator 75 generates the pulse signal.

Note that the electric signal having a frequency component changing with time may be input from the oscillator 75 into the first external antenna 71 instead of the pulse signal that is the composite wave made up of the waveforms of a plurality of frequency components. In such a case, the electromagnetic wave output from the second external antenna 72 is such that the intensity of the frequency component of the resonance frequency of the bandpass element 14 is the highest in the electromagnetic waves input to the first external antenna 71. Therefore, where the electric signal having the frequency component changing with time is input from the oscillator 75 into the first external antenna 71, the temperature of the conductor 50 can be measured as discussed above.

The bandpass element 14 and the isolator 15 mounted on the substrate 12 are passive components that operate by consuming power of the input electric signal, and hence there is no need to externally supply power to the bandpass element 14 and the isolator 15. This means that the temperature measuring instrument 1 does not need to be equipped with a battery; thus, in no case, battery exhaustion causes failure to measure the temperature of the conductor 50. Also, the passive components less frequently fail than active components that perform operations such as amplification and rectification. The gas insulated device has an expected lifespan of several decades; thus, it is generally not thought that the tank 100 is opened for maintenance operation. For this reason, the temperature measuring instrument 1 according to the first embodiment, which require neither replacement of a battery with the tank 100 opened nor replacement of a failed component, is suitable for installation inside the tank 100 of the gas insulated device.

The temperature measuring instrument 1 according to the first embodiment directly, which directly measures the temperature of the conductor 50, makes it less likely that accuracy of the measurement of the temperature of the conductor 50 is deteriorated, even when the temperature of the insulating gas in the tank 100 increases under the influence of insolation.

The temperature measuring instrument according to the first embodiment may measure the temperature of the conductor of the gas insulated device during the operation of the gas insulated device.

### Second Embodiment

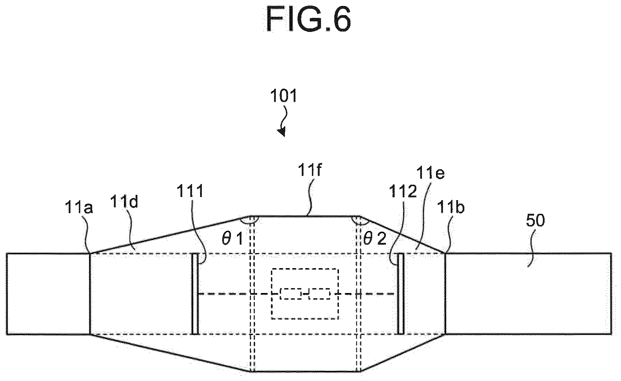

FIG. 6 is a top plan view of a temperature measuring instrument according to a second embodiment of the present invention. In a temperature measuring instrument 101 according to the second embodiment, the angle θ1 formed by the first tapered portion 11d and the intermediate portion 11f is larger than the angle θ2 formed by the second tapered portion 11e and the intermediate portion 11f (θ1>θ2). That is, a taper of the second tapered portion 11e is larger than a taper of the first tapered portion 11d. The other parts of the temperature measuring instrument 101 are similar to those of the temperature measuring instrument 1 according to the first embodiment.

Because the temperature measuring instrument 101 according to the second embodiment satisfies θ1>θ2 and the taper of the second tapered portion 11e is larger than the taper of the first tapered portion 11d, a length from one end 11a to the opposite end 11b is shorter than that of the temperature measuring instrument satisfying θ1=θ2. The larger inclination of the second tapered portion 11e with respect to a direction of extension of the conductor 50 makes it more likely that the electromagnetic wave is radiated from the second slot antenna 112 in a direction having an angle with respect to the direction of extension of the conductor 50. When the electromagnetic wave is radiated from the second slot antenna 112 in the direction having the angle with respect to the direction of extension of the conductor 50 within the tank 100, the electromagnetic wave travels being reflected in the tank 100, such that the electromagnetic wave reaches the insulating spacer 62. Even if the electromagnetic wave is radiated from the second slot antenna 112 in the direction having the angle with respect to the direction of extension of the conductor 50, the electromagnetic wave can be received by the second external antenna 72.

The temperature measuring instrument 101 according to the second embodiment has a reduced dimension from one end 11a of the housing 11 to the opposite end 11b of the housing 11. That is, the temperature measuring instrument 101 according to the second embodiment has the downsized housing 11.

In the above-described first and second embodiments, the first slot antenna 111 is formed in the first tapered portion 11d and the second slot antenna 112 is formed in the second tapered portion 11e, but at least one of the first slot antenna 111 and the second slot antenna 112 may be formed in the intermediate portion 11f.

The configuration described in the above-described embodiment illustrates one example of the contents of the present invention and this may be combined with another known technology, and it is possible to omit or change a part of the configuration without departing from the gist of the present invention.

### Reference Signs List

1, 101 temperature measuring instrument; 11 housing; 11a one end; 11b opposite end; 11c outer frame; 11d first tapered portion; 11e second tapered portion; 11f intermediate portion; 11g first partition wall; 11h second partition wall; 12 substrate; 12a wiring pattern; 13a, 13b coaxial cable; 14 bandpass element; 15 isolator; 50 conductor; 51 conductor connecting portion; 61, 62 insulating spacer; 71 first external antenna; 72 second external antenna; 73 amplifier; 74 oscilloscope; 75 oscillator; 100 tank; 111 first slot antenna; 112 second slot antenna.

## Claims

1. A temperature measuring instrument (1) for measuring a temperature of a conductor (50) of a gas insulated device, the temperature measuring instrument comprising:
a housing (11) including a cylindrical outer frame (11c) having conductivity, the outer frame having first and second slot antennas (111, 112) formed therein; and
a substrate (12) accommodated in the housing, the substrate having a bandpass element (14) and an isolator (15) mounted thereon, the bandpass element being connected to the first slot antenna and having a resonance frequency having a temperature characteristic, the isolator being connected to the second slot antenna, the substrate including a wiring pattern interconnecting the bandpass element and the isolator,
wherein the bandpass element is in contact with and thermally connected to the conductor inserted into the housing.

2. The temperature measuring instrument according to claim 1,
wherein the housing includes: a first tapered portion (11d) having an outer diameter increasing from one end (11a) of the housing toward an opposite end (11b) of the housing; an intermediate portion (11f) having a constant outer diameter; and a second tapered portion (11e) having an outer diameter decreasing from a side of the one end toward the opposite end,
the first slot antenna is formed in the first tapered portion,
the second slot antenna is formed in the second tapered portion, and
the substrate is accommodated in the intermediate portion.

3. The temperature measuring instrument according to claim 1, wherein the substrate (12) has a main surface including: a surface facing the conductor inserted into the housing; and a rear surface opposite to the surface facing the conductor, the isolator (15) being mounted on the rear surface.

4. The temperature measuring instrument according to claim 2, wherein the housing includes: a first partition wall (11g) separating the first tapered portion and the intermediate portion from each other; and a second partition wall (11h) separating the intermediate portion and the second tapered portion from each other.

5. The temperature measuring instrument according to claim 2, wherein an angle (θ1) formed by the first tapered portion (11d) and the intermediate portion (11f) is larger than an angle (θ2) formed by the second tapered portion (11e) and the intermediate portion (11f).

6. A gas insulated device comprising:
a tank (100) filled with insulating gas;
a conductor (50) disposed in the tank; and
the temperature measuring instrument (1) according to any one of claims 1 to 5 covering the conductor.

7. A conductor temperature measuring method for measuring temperature of a conductor (50) of a gas insulated device by using the temperature measuring device (1) according to any one of claims 1 to 5, the method comprising:
installing a first external antenna (71) on one (61) of two insulating spacers (61, 62) of the gas insulated device and installing a second external antenna (72) on the other insulating spacer (62), the temperature measuring instrument being located between the two insulating spacers, the conductor being inserted in the temperature measuring instrument;
inputting an electric signal including a plurality of frequency components into the first external antenna to allow an electromagnetic wave including a plurality of frequency components to propagate in the gas insulated device;
allowing the first slot antenna (111) to convert, into an electric signal, the electromagnetic wave including the plurality of frequency components propagating in the gas insulated device;
inputting, from the first slot antenna into the bandpass element (14), an electric signal including a plurality of frequency components including a frequency component of a resonance frequency of the bandpass element, and allowing the frequency component of the resonance frequency of the bandpass element to pass through the bandpass element toward the isolator (15);
allowing the second slot antenna (112) to convert an electric signal having passed through the isolator, into an electromagnetic wave, and allowing the electromagnetic wave to propagate in the gas insulated device;
allowing the second external antenna to convert the electromagnetic wave propagating in the gas insulated device, into an electric signal; and
on the basis of a frequency of the electric signal provided by the second external antenna, determining a temperature of a portion of the conductor, the temperature measuring instrument being installed at the portion of the conductor.

8. The conductor temperature measuring method according to claim 7, comprising inputting, into the first external antenna (71), a pulse signal that is combined electric signals including the plurality of frequency components.

9. The conductor temperature measuring method according to claim 7, comprising inputting the electric signal including the plurality of frequency components, into the first external antenna (71) by changing the frequency of the electric signal with time.

## Patentansprüche

1. Temperaturmessinstrument (1) zum Messen einer Temperatur eines Leiters (50) einer gasisolierten Vorrichtung, wobei das Temperaturmessinstrument aufweist:
ein Gehäuse (11), das einen zylindrischen Außenrahmen (11c) umfasst, der eine Leitfähigkeit aufweist, wobei der Außenrahmen erste und zweite darin ausgebildete Schlitzantennen (111, 112) aufweist; und
ein Substrat (12), das in dem Gehäuse untergebracht ist, wobei das Substrat ein daran befestigtes Bandpasselement (14) und einen daran befestigten Isolator (15) aufweist, wobei das Bandpasselement mit der ersten Schlitzantenne verbunden ist und eine Resonanzfrequenz aufweist, die eine Temperatureigenschaft aufweist, wobei der Isolator mit der zweiten Schlitzantenne verbunden ist, wobei das Substrat ein Verdrahtungsmuster umfasst, das das Bandpasselement und den Isolator miteinander verbindet,
wobei das Bandpasselement mit dem Leiter, der in das Gehäuse eingeführt ist, in Kontakt ist und damit wärmeverbunden ist.

2. Temperaturmessinstrument nach Anspruch 1,
wobei das Gehäuse umfasst: einen ersten verjüngten Abschnitt (11d) mit einem Außendurchmesser, der sich von einem Ende (11a) des Gehäuses in Richtung eines gegenüberliegenden Endes (11b) des Gehäuses erhöht; einen Zwischenabschnitt (11f) mit einem konstanten Außendurchmesser; und einen zweiten verjüngten Abschnitt (11e) mit einem Außendurchmesser, der sich von einer Seite des einen Endes in Richtung des gegenüberliegenden Endes verringert,
wobei die erste Schlitzantenne in dem ersten verjüngten Abschnitt ausgebildet ist,
wobei die zweite Schlitzantenne in dem zweiten verjüngten Abschnitt ausgebildet ist, und
wobei das Substrat in dem Zwischenabschnitt untergebracht ist.

3. Temperaturmessinstrument nach Anspruch 1, wobei das Substrat (12) eine Hauptfläche aufweist, die umfasst: eine Fläche, die dem Leiter zugewandt ist, der in das Gehäuse eingeführt ist; und eine hintere Fläche gegenüberliegend zu der Fläche, die dem Leiter zugewandt ist, wobei der Isolator (15) an der hinteren Fläche montiert ist.

4. Temperaturmessinstrument nach Anspruch 2, wobei das Gehäuse umfasst: eine erste Trennwand (11g), die den ersten verjüngten Abschnitt und den Zwischenabschnitt voneinander trennt; und eine zweite Trennwand (11h), die den Zwischenabschnitt und den zweiten verjüngten Abschnitt voneinander trennt.

5. Temperaturmessinstrument nach Anspruch 2, wobei ein Winkel (θ1), der durch den ersten verjüngten Abschnitt (11d) und den Zwischenabschnitt (11f) gebildet wird, größer als ein Winkel (θ2) ist, der durch den zweiten verjüngten Abschnitt und den Zwischenabschnitt (11f) gebildet wird.

6. Gasisolierte Vorrichtung, die aufweist:
einen Tank (100), der mit einem Isoliergas gefüllt ist;
ein Leiter (50), der in dem Tank angeordnet ist; und
das Temperaturmessinstrument (1) gemäß einem der Ansprüche 1 bis 5, das den Leiter bedeckt.

7. Leitertemperatur-Messverfahren zum Messen einer Temperatur eines Leiters (50) einer gasisolierten Vorrichtung durch Verwenden der Temperaturmessvorrichtung (1) gemäß einem der Ansprüche 1 bis 5, wobei das Verfahren aufweist:
Befestigen einer ersten externen Antenne (71) an einem (61) von zwei Isolierabstandshaltern (61, 62) der gasisolierten Vorrichtung und Befestigen einer zweiten externen Antenne (72) an dem anderen Isolierabstandshalter (62), wobei sich das Temperaturmessinstrument zwischen den zwei Isolierabstandshaltern befindet, wobei der Leiter in das Temperaturmessinstrument eingeführt ist;
Eingeben eines elektrischen Signals, das eine Vielzahl von Frequenzkomponenten umfasst, in die erste externe Antenne, um eine elektromagnetische Welle, die eine Vielzahl von Frequenzkomponenten umfasst, in der gasisolierten Vorrichtung sich ausbreiten zu lassen;
es der ersten Schlitzantenne (111) ermöglichen, die elektromagnetische Welle einschließlich der Vielzahl von Frequenzkomponenten, die sich in der gasisolierten Vorrichtung ausbreiten, in ein elektrisches Signal zu wandeln,
Eingeben, aus der ersten Schlitzantenne in das Bandpasselement (14), eines elektrischen Signals einschließlich einer Vielzahl von Frequenzkomponenten, die eine Frequenzkomponente einer Resonanzfrequenz des Bandpasselements umfassen, und es der Frequenzkomponente der Resonanzfrequenz des Bandpasselements ermöglichen, durch das Bandpasselement in Richtung des Isolators (15) zu laufen;
es der zweiten Schlitzantenne (112) ermöglichen, ein elektrisches Signal, das durch den Isolator gelaufen ist, in eine elektromagnetische Welle zu wandeln, und es der elektromagnetischen Welle ermöglichen, sich in der gasisolierten Vorrichtung auszubreiten;
es der zweiten externen Antenne ermöglichen, die elektromagnetische Welle, die sich in der gasisolierten Vorrichtung ausbreitet, in ein elektrisches Signal zu wandeln; und
auf Basis einer Frequenz des elektrischen Signals, das durch die zweite externe Antenne vorgesehen wird, Bestimmen einer Temperatur eines Abschnitts des Leiters, wobei das Temperaturmessinstrument an dem Abschnitt des Leiters befestigt ist.

8. Leitertemperatur-Messverfahren nach Anspruch 7, das ein Eingeben, in die erste externe Antenne (71), eines Impulssignals aufweist, das kombinierte elektrische Signale einschließlich der Vielzahl von Frequenzkomponenten darstellt.

9. Leitertemperatur-Messverfahren nach Anspruch 7, das ein Eingeben des elektrischen Signal einschließlich der Vielzahl von Frequenzkomponenten in die erste externe Antenne (71) aufweist, indem die Frequenz des elektrisches Signals mit der Zeit geändert wird.

## Revendications

1. Instrument de mesure de température (1) pour mesurer la température d'un conducteur (50) d'un dispositif à isolation gazeuse, l'instrument de mesure de température comprenant:
un boîtier (11) comprenant un cadre extérieur cylindrique (11c) ayant une conductivité, le cadre extérieur ayant des première et seconde antennes à fentes (111, 112) formées à l'intérieur ; et
un substrat (12) logé dans le boîtier, le substrat ayant un élément passe-bande (14) et un isolateur (15) monté sur celui-ci, l'élément passe-bande étant connecté à la première antenne à fentes et ayant une fréquence de résonance ayant une caractéristique de température, l'isolateur étant connecté à la seconde antenne à fentes, le substrat comprenant un motif de câblage interconnectant l'élément passe-bande et l'isolateur,
l'élément passe-bande étant en contact avec et thermiquement connecté au conducteur inséré dans le boîtier.

2. Instrument de mesure de température selon la revendication 1,
le boîtier comprenant : une première partie conique (11d) ayant un diamètre extérieur croissant depuis une extrémité (11a) du boîtier vers une extrémité opposée (11b) du boîtier ; une partie intermédiaire (11f) ayant un diamètre extérieur constant ; et une seconde partie conique (11e) ayant un diamètre extérieur décroissant depuis un côté de la première extrémité vers l'extrémité opposée,
la première antenne à fentes étant formée dans la première partie conique,
la seconde antenne à fentes étant formée dans la seconde partie conique, et
le substrat étant logé dans la partie intermédiaire.

3. Instrument de mesure de température selon la revendication 1, le substrat (12) ayant une surface principale comprenant : une surface faisant face au conducteur inséré dans le boîtier ; et une surface arrière opposée à la surface faisant face au conducteur, l'isolateur (15) étant monté sur la surface arrière.

4. Instrument de mesure de température selon la revendication 2, le boîtier comprenant : une première paroi de séparation (11g) séparant la première partie conique et la partie intermédiaire l'une de l'autre ; et une seconde paroi de séparation (11h) séparant la partie intermédiaire et la seconde partie conique l'une de l'autre.

5. Instrument de mesure de température selon la revendication 2, un angle (θ1) formé par la première partie conique (11d) et la partie intermédiaire (11f) étant plus grand qu'un angle (θ2) formé par la seconde partie conique (11e) et la partie intermédiaire (11f).

6. Dispositif à isolation gazeuse comprenant :
un réservoir (100) rempli de gaz isolant ;
un conducteur (50) disposé dans le réservoir ; et
l'instrument de mesure de température (1) selon l'une quelconque des revendications 1 à 5 recouvrant le conducteur.

7. Procédé de mesure de température d'un conducteur pour mesurer la température d'un conducteur (50) d'un dispositif à isolation gazeuse en utilisant le dispositif de mesure de température (1) selon l'une quelconque des revendications 1 à 5, le procédé comprenant :
l'installation d'une première antenne externe (71) sur l'un (61) de deux éléments d'espacement isolants (61, 62) du dispositif à isolation gazeuse et l'installation d'une seconde antenne externe (72) sur l'autre élément d'espacement isolant (62), l'instrument de mesure de température étant situé entre les deux éléments d'espacement isolants, le conducteur étant inséré dans l'instrument de mesure de température ;
l'entrée d'un signal électrique comprenant une pluralité de composantes de fréquence dans la première antenne externe pour permettre à une onde électromagnétique comprenant une pluralité de composantes de fréquence de se propager dans le dispositif à isolation gazeuse ;
le fait de permettre à la première antenne à fentes (111) de convertir, en un signal électrique, l'onde électromagnétique comprenant la pluralité de composantes de fréquence se propageant dans le dispositif à isolation gazeuse ;
l'entrée, à partir de la première antenne à fentes dans l'élément passe-bande (14), d'un signal électrique comprenant une pluralité de composantes de fréquence comprenant une composante de fréquence d'une fréquence de résonance de l'élément passe-bande, et le fait de permettre à la composante de fréquence de la fréquence de résonance de l'élément passe-bande de passer à travers l'élément passe-bande vers l'isolateur (15) ;
le fait de permettre à la seconde antenne à fentes (112) de convertir un signal électrique ayant traversé l'isolateur, en une onde électromagnétique, et le fait de permettre à l'onde électromagnétique de se propager dans le dispositif à isolation gazeuse ;
le fait de permettre à la seconde antenne externe de convertir l'onde électromagnétique se propageant dans le dispositif à isolation gazeuse, en un signal électrique ; et
sur la base d'une fréquence du signal électrique fourni par la seconde antenne externe, la détermination d'une température d'une partie du conducteur, l'instrument de mesure de température étant installé au niveau de la partie du conducteur.

8. Procédé de mesure de température d'un conducteur selon la revendication 7, comprenant l'entrée, dans la première antenne externe (71), d'un signal d'impulsion qui est combiné à des signaux électriques comprenant la pluralité de composantes de fréquence.

9. Procédé de mesure de température d'un conducteur selon la revendication 7, comprenant l'entrée du signal électrique comprenant la pluralité de composantes de fréquence, dans la première antenne externe (71) en changeant la fréquence du signal électrique avec le temps.
